(19) Europäisches Patentamt
European Patent Office
Office européen des brevets

(11) **EP 3 126 865 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(21) Anmeldenummer: **14717430.4**

(22) Anmeldetag: **02.04.2014**

(51) Int Cl.:
*G01S 7/35* (2006.01)     *G01F 23/284* (2006.01)
*G01S 13/88* (2006.01)     *G01S 13/34* (2006.01)

(86) Internationale Anmeldenummer:
**PCT/EP2014/056612**

(87) Internationale Veröffentlichungsnummer:
**WO 2015/149850 (08.10.2015 Gazette 2015/40)**

(54) **ENTZERRER FÜR DEN ZWISCHENFREQUENZKANAL EINES FMCW-FÜLLSTANDSENSORS**

EQUALIZER FOR THE INTERMEDIATE FREQUENCY CHANNEL OF AN FMCW FILL STATE SENSOR

CORRECTEUR POUR LE CANAL DE FRÉQUENCE INTERMÉDIAIRE D'UN DÉTECTEUR DE NIVEAU DE REMPLISSAGE FMCW

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.02.2017 Patentblatt 2017/06**

(73) Patentinhaber: **VEGA Grieshaber KG**
**77709 Wolfach (DE)**

(72) Erfinder:
- **FISCHER, Michael**
  **72275 Alpirsbach (DE)**
- **WELLE, Roland**
  **77756 Hausach (DE)**
- **GRIESSBAUM, Karl**
  **77796 Mühlenbach (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
**EP-A1- 2 660 568**     **EP-A2- 1 933 117**
**WO-A1-98/38524**     **DE-A1-102008 050 117**
**US-A1- 2010 223 019**

- **VOSSIEK M ET AL: "Novel FMCW radar system concept with adaptive compensation of phase errors", MICROWAVE CONFERENCE, 1996. 26TH EUROPEAN, IEEE, PISCATAWAY, NJ, USA, 6. September 1996 (1996-09-06), Seiten 135-139, XP031605283,**

**Beschreibung**

Gebiet der Erfindung

Die Erfindung betrifft das Gebiet der Füllstandmesstechnik mit frequenzmodulierten kontinuierlichen Wellen. Insbesondere betrifft die Erfindung einen FMCW-Füllstandsensor und ein Verfahren zum Entzerren eines Zwischenfrequenz-Kanals eines FMCW-Füllstandsensors.

Technischer Hintergrund

FMCW-Füllstandmessgeräte (FMCW: Frequency Modulated Continuous Wave), und insbesondere FMCW-Füllstandradargeräte, sollten eine verhältnismäßig große Dynamik aufweisen. Neben der Fähigkeit zur Verarbeitung von extrem kleinen Echosignalen darf der Empfänger des Füllstandmessgeräts durch sehr große Echosignale nicht übersteuert werden.

Bei einem FMCW-Füllstandmessgerät werden Echosignale mit sehr kleinen Empfangsleistungen meist durch weit entfernte Objekte verursacht. Echosignale mit großen Empfangsleistungen stammen meist von Objekten im Nahbereich des Füllstandmessgeräts. Die Entfernungen der zu messenden Füllstände können einen Abstand von 0 m bis weit über 100 m zur Antenne des Füllstandmessgeräts aufweisen. Auch ist es möglich, dass die Antenne in das Füllmedium hineinragt, so dass sich im Fall einer offenen Hornantenne das Füllmedium auch im Antennenhorn befinden kann.

Um Echosignale mit solch hohen Dynamikumfängen verarbeiten zu können, können Schaltungen verwendet werden, die zu einer zeitabhängigen Verstärkungsregulierung führen und damit eine Dynamikkompression bewirken. Derartige Verfahren sind in der Radartechnik unter dem Namen Sensitivity Time Control (STC) bekannt. Bei einem Empfänger mit STC-Funktionalität wird beispielsweise die Verstärkung während des Empfangsvorgangs kontinuierlich erhöht. Die Verstärkung ist somit abhängig von der Zeit und demnach auch von der Entfernung des Füllstandsensors zur Oberfläche des Füllmediums. Folglich werden Echosignale mit kleinen Laufzeiten und entsprechend großen Empfangsleistungen weniger verstärkt als Signale mit größeren Laufzeiten und kleineren Leistungen.

Diese laufzeit- und somit entfernungsabhängige Verstärkung (oder Dämpfung) der Echosignale kann die Kurvenform der Echokurve beeinflussen, was wiederum Einfluss auf die Genauigkeit des Füllstandsensors insbesondere im Nahbereich (also bei hohen Füllständen) haben kann.

EP 2 660 568 A1 beschreibt ein Füllstandmessgerät, welches die STC-Filterfunktion vermessen kann, indem hierfür ein Referenzsignal direkt in das STC-Filter eingespeist wird. DE 10 2008 050 117 A1 beschreibt die Kalibrierung einer Radareinheit mit gerätespezifischen Korrekturwerten.

EP 1 933 117 A2 beschreibt ein Verfahren und eine Vorrichtung zur Korrektur nicht idealer Zwischenfrequenzsignale in einem FMCW-Radar.

WO 98/38524 A1 beschreibt ein Verfahren zum Betrieb eines Sensorsystems und ein entsprechendes Sensorsystem zur Kompensation von Phasenfehlern.

US 2010/223019 beschreibt ein Füllstandmessgerät.

Aufgabe der Erfindung

Es ist eine Aufgabe der Erfindung, die Messgenauigkeit eines Füllstandsensors im Nahbereich der Antenne zu verbessern.

Es sind ein FMCW-Füllstandsensor sowie ein Verfahren zum Entzerren eines Zwischenfrequenzsignals eines FMCW-Füllstandsensors gemäß den Merkmalen der unabhängigen Patentansprüche angegeben. Weiterbildungen der Erfindung ergeben sich aus den Unteransprüchen der folgenden Beschreibung.

Die im Folgenden beschriebenen Ausführungsformen und Ausführungsbeispiele betreffen gleichermaßen den Füllstandsensor und das Verfahren. In anderen Worten sind die im Folgenden im Hinblick auf den Füllstandsensor beschriebenen Merkmale auch als Verfahrensschritte in dem Verfahren implementierbar, und umgekehrt.

Gemäß einem ersten Aspekt der Erfindung ist ein FMCW-Füllstandsensor angegeben. Bei dem Füllstandsensor kann es sich beispielsweise um einen Füllstandradarsensor oder einen Ultraschallsensor handeln. Der FMCW-Füllstandsensor weist ein FMCW-Modul und einen sich daran anschließenden Zwischenfrequenz-Kanal auf.

Das FMCW-Modul dient dem Umwandeln eines vom Füllstandsensor erfassten Messsignals in ein Zwischenfrequenzsignal. Der Füllstandsensor weist darüber hinaus eine Antenne auf, welche ein Messsignal in Richtung einer Füllgutoberfläche aussendet und das an der Füllgutoberfläche und ggf. dem Behälterboden und/oder anderen Reflektoren reflektierte Messsignal wieder aufnimmt. Das FMCW-Modul wandelt dann das reflektierte, empfangene Messsignal in ein Zwischenfrequenzsignal um, welches an den Zwischenfrequenz-Kanal des Füllstandsensors übergeben wird. Der Zwischenfrequenz-Kanal dient der Erzeugung einer Echokurve aus dem Zwischenfrequenzsignal.

Der Zwischenfrequenz-Kanal weist einen Analog-Digital-Umsetzer zur Digitalisierung des Zwischenfrequenzsignals und einen Entzerrer zur Entzerrung des von dem Analog-Digital-Umsetzer digitalisierten Zwischenfrequenzsignals auf.

Der Entzerrer ist zur Faltung des digitalisierten Zwischenfrequenzsignals mit einer Entzerrungsfunktion in Form einer Zeitfunktion $g(nT)$ ausgeführt. Diese Faltung findet im Zeitbereich statt. In anderen Worten ist der Entzerrer in einem Bereich des Zwischenfrequenz-Kanals angeordnet, der sich unmittelbar hinter dem Analog-Digital-Wandler befindet, bevor das Zwischenfrequenzsignal aus dem Zeitbereich in den Frequenzbereich transformiert wurde.

Alternativ oder zusätzlich ist der Entzerrer zur Multiplikation des digitalisierten Zwischenfrequenzsignals mit einer Entzerrungsfunktion in Form einer Übertragungsfunktion $G(\omega_k)$ zu diskreten Frequenzen ausgeführt. Diese Multiplikation findet im Frequenzbereich statt, so dass also die Multiplikation nach der Transformation des Zwischenfrequenzsignals vom Zeitbereich in den Frequenzbereich stattfindet.

Alternativ oder zusätzlich ist der Entzerrer als digitales Filter mit endlicher oder unendlicher Impulsantwort (sog. FIR-Filter bzw. IIR-Filter) zur Filterung des digitalisierten Zwischenfrequenzsignals ausgeführt. In diesem Falle findet die Entzerrung in Form einer Filterung im Zeitbereich des Zwischenfrequenz-Kanals statt. Alternativ oder zusätzlich hierzu kann der Entzerrer zur Multiplikation des digitalisierten Zwischenfrequenzsignals mit einer Entzerrungsfunktion in Form des Betrags der Übertragungsfunktion $G(\omega_k)$ zu diskreten Frequenzen ausgeführt sein.

An dieser Stelle sei angemerkt, dass der Entzerrer aus einer oder mehreren Einheiten oder Schaltungen bestehen kann, welche jeweils für sich genommen oder in Kombination miteinander eine der hier oben beschriebenen Entzerrungsfunktionen durchführen können.

Der Füllstandsensor kann zum Anschluss an eine 4...20 mA Zweileiterschleife ausgeführt sein, über welche der Datenaustausch zwischen dem Sensor und einer Zentrale sowie die Energieversorgung des Sensors erfolgt.

Gemäß einer Ausführungsform der Erfindung weist der Füllstandsensor weiterhin ein Sensitivity Frequency Control-Filter (sog. SFC-Filter) auf, wobei das SFC-Filter in dem Zwischenfrequenz-Kanal und vor dem Entzerrer angeordnet ist, und wobei die Zeitfunktion g(nT) eine Transformation der inversen Übertragungsfunktion $G(\omega_k)$ des SFC-Filters $H(\omega)$ in den Zeitbereich ist.

Die Übertragungsfunktion des SFC-Filters $H(\omega)$ kann auch als Filterfunktion bezeichnet werden und gibt die Verstärkung (bzw. Dämpfung) des SFC-Filters in Abhängigkeit von der Frequenz des ihn durchlaufenden Signals wieder.

Gemäß einer weiteren Ausführungsform der Erfindung ist das SFC-Filter in dem Zwischenfrequenz-Kanal und vor dem Entzerrer angeordnet, wobei die Übertragungsfunktion $G(\omega_k)$ die inverse Übertragungsfunktion des SFC-Filters $H(\omega)$ zu diskreten Frequenzen $\omega_k$ ist.

Gemäß einer weiteren Ausführungsform der Erfindung weist der Zwischenfrequenz-Kanal ein Fenstermodul auf, welches nach dem Entzerrer angeordnet ist und zur Fensterung des durch Faltung, Multiplikation oder Filterung mit dem FIR/IIR-Filter erhaltenen Zwischenfrequenzsignals ausgeführt ist.

Gemäß einer weiteren Ausführungsform der Erfindung weist der Zwischenfrequenz-Kanal ein DFT-Modul auf, welches vor oder nach dem Entzerrer angeordnet ist und zur diskreten Fourier-Transformation des Zwischenfrequenzsignals ausgeführt ist.

Gemäß einer weiteren Ausführungsform der Erfindung weist der Zwischenfrequenz-Kanal ein IDFT-Modul auf, welches nach dem Entzerrer angeordnet ist und zur inversen diskreten Fourier-Transformation des Zwischenfrequenzsignals ausgeführt ist.

Gemäß einer weiteren Ausführungsform der Erfindung weist der Zwischenfrequenz-Kanal ein Betragsspektrumsbildungsmodul auf, welches vor dem Entzerrer angeordnet ist. Dieses Betragsspektrumsbildungsmodul (ABS) dient der Berechnung des Betrages des komplexen Zwischenfrequenzsignals im Frequenzbereich.

Gemäß einem weiteren Aspekt der Erfindung ist ein Verfahren zum Entzerren eines Zwischenfrequenzsignals eines FMCW-Füllstandsensors angegeben, bei dem ein von dem Füllstandsensor aufgenommenes Messsignal in ein Zwischenfrequenzsignal umgewandelt wird, dieses Zwischenfrequenzsignal dann einer Analog-DigitalWandlung unterworfen wird und daraufhin das digitalisierte Zwischenfrequenzsignal entzerrt wird, woraufhin aus dem entzerrten digitalisierten Zwischenfrequenzsignal eine Echokurve erzeugt werden kann. Bei dieser Echokurve kann es sich bereits um die endgültige Echokurve handeln oder um eine Echokurve, welche lediglich zur Suche bzw. Identifikation des Füllstandechos verwendet wird.

Das Entzerren kann durch Falten des digitalisierten Zwischenfrequenzsignals und einer Entzerrungsfunktion in Form einer Zeitfunktion g(nT), durch Multiplizieren des digitalisierten Zwischenfrequenzsignals mit einer Entzerrungsfunktion in Form einer Übertragungsfunktion $G(\omega_k)$ zu diskreten Frequenzen, durch digitales Filtern des digitalisierten Zwischenfrequenzsignals oder durch Multiplizieren des digitalisierten Zwischenfrequenzsignals mit einer Empfangsfunktion in Form des Betrags der Übertragungsfunktion $G(\omega_k)$ zu diskreten Frequenzen erfolgen.

Auf diese Weise ist ein Verfahren zur Entzerrung eines durch ein SFC-Filter verzerrten ZF-Signals mit geeignetem Entzerren angegeben. Weiter stellt die Erfindung eine technische Lehre bereit, wie eine Entzerrfunktion aus der Übertragungsfunktion eines SFC-Filters bestimmt werden kann.

Im Folgenden werden mit Verweis auf die Figuren Ausführungsbeispiele der Erfindung beschrieben.

Kurze Beschreibung der Figuren

Fig. 1A zeigt einen Füllstandsensor 100, der an einem Behälter installiert ist.

Fig. 1B zeigt eine SFC-Filterfunktion.

Fig. 2 zeigt einen Schaltkreis eines Füllstandsensors gemäß einem Ausführungsbeispiel der Erfindung.

Fig. 3 zeigt einen Schaltkreis eines Füllstandsensors gemäß einem weiteren Ausführungsbeispiel der Erfindung.

Fig. 4 zeigt einen Schaltkreis eines Füllstandsensors gemäß einem weiteren Ausfiihrungsbeispiel der Erfindung.

Fig. 5 zeigt einen Schaltkreis eines Füllstandsensors gemäß einem weiteren Ausführungsbeispiel der Erfindung.

Fig. 6 zeigt einen Schaltkreis eines Füllstandsensors gemäß einem weiteren Ausführungsbeispiel der Erfindung.

Fig. 7 zeigt einen Schaltkreis eines Füllstandsensors gemäß einem weiteren Ausführungsbeispiel der Erfindung.

Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

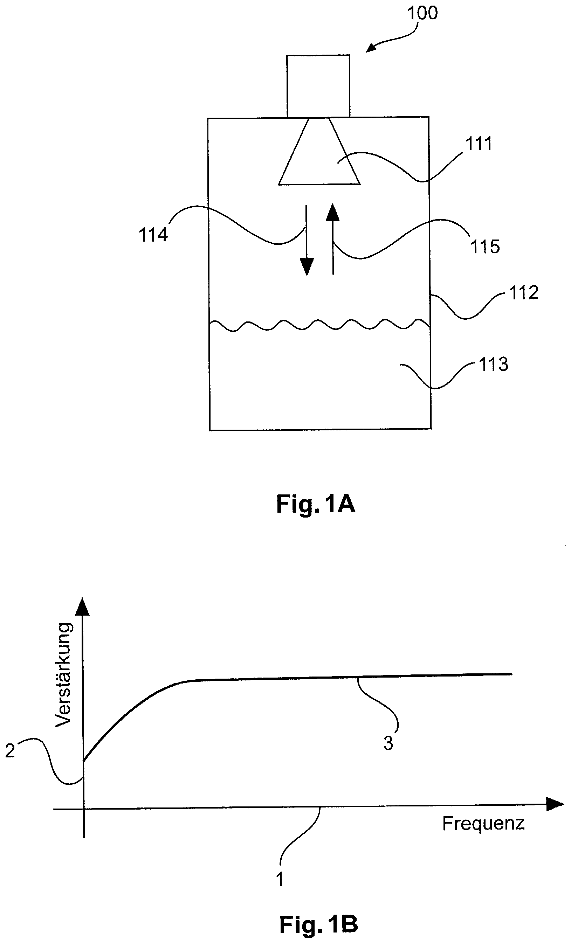

Fig. 1A zeigt einen Füllstandsensor 100, der an einem Behälter installiert ist. Der Füllstandsensor 100 weist eine Antenneneinrichtung 111 auf, welche ein Messsignal 114 in Richtung der Oberfläche eines in dem Behälter 112 gespeicherten Füllmediums 113 aussendet. Das Messsignal 114 wird an der Oberfläche und ggf. dem Behälterboden oder anderen Reflektoren reflektiert und als reflektiertes Messsignal 115 zur Antenneneinrichtung 111 rückgesendet, welche das reflektierte Messsignal aufnimmt.

Bei dem Messsignal handelt es sich um ein frequenzmoduliertes kontinuierliches Wellensignal (FMCW-Signal), welches nach Durchlaufen des FMCW-Moduls des Füllstandsensors in den Zwischenfrequenz-Kanal des Füllstandsensors übergeben wird, welcher daraus eine Echokurve erzeugt.

Bei einem FMCW-Füllstandsensor, beispielsweise einem FMCW-Radar, besteht im Allgemeinen ein systembedingter linearer Zusammenhang zwischen der Frequenz des im FMCW-Modul des Füllstandsensors entstehenden ZF-Signals (ZF = Zwischenfrequenz) und der Entfernung zum Zielobjekt des Füllstandmessgerätes. Mit anderen Worten ist die Frequenz des ZF-Signals umso höher, je weiter entfernt sich die Füllgutoberfläche vom Füllstandsensor befindet. Dadurch kommen üblicherweise große Amplituden im ZF-Signal nur bei Signalanteilen mit niedrigerer Frequenz vor. Entsprechend kommen bei Signalanteilen hoher Frequenz lediglich kleine Amplituden im ZF-Signal zustande.

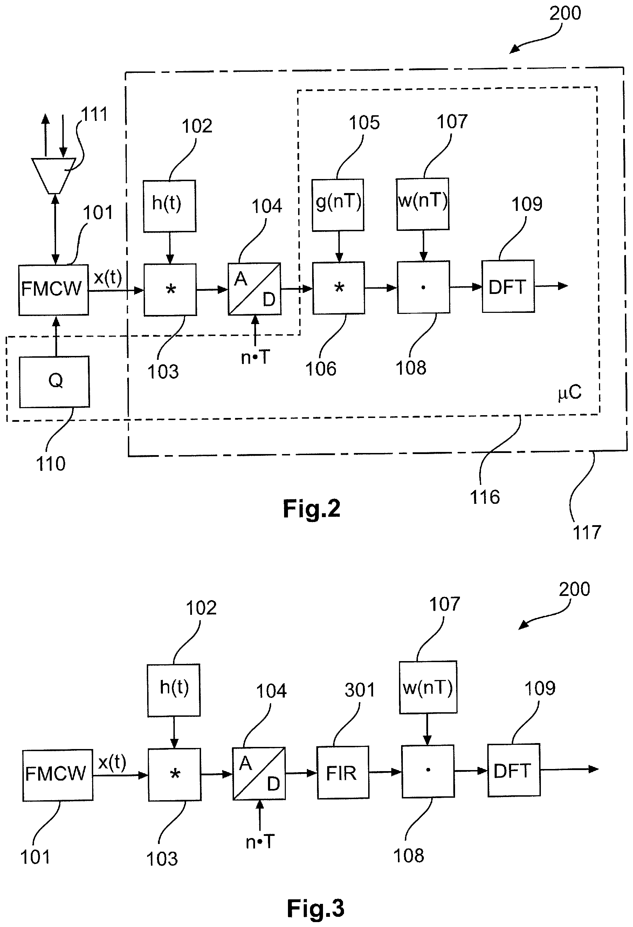

Nach dem Heruntermischen des HF-Empfangssignals, bei dem es sich um das an der Füllgutoberfläche reflektierte Messsignal handelt, in dem Zwischenfrequenzbereich, was durch das FMCW-Modul 101 (vgl. beispielsweise Fig. 2) erfolgt, lässt sich folglich mit einem einfach zu realisierenden Hochpassfilter eine Art STC realisieren.

In diesem Zusammenhang wird im Folgenden nicht von einer STC-Funktion gesprochen, sondern von einer SFC-Funktion (Sensitivity Frequency Control Funktion) oder SDC-Funktion (Sensitivity Distance Control).

Fig. 1B zeigt eine typische SFC-Hochpassfunktion 3 für den Zwischenfrequenz-Kanal eines FMCW-Füllstandsensors. Die horizontale Achse 1 bezeichnet die Frequenz und die vertikale Achse 2 die Verstärkung der SFC-Hochpassfunktion.

Erst für größere Frequenzen erreicht die Verstärkung im ZF-Verstärker des SFC-Hochpasses ihren Maximalwert. Diese damit verbundene Dynamikkompression im Nahbereich des Füllstandsensors ermöglicht beispielsweise den Einsatz eines günstigeren Analog-Digital-Umsetzers im ZF-Kanal, der mit einer geringeren Quantisierungsauflösung (Bitbreite) auskommt.

Das Zwischenfrequenzsignal kann jedoch durch den SFC-Hochpass in Amplitude und Phase verzerrt werden. Insbesondere kann dieser Effekt bei einem nicht linearen Phasengang des SFC-Hochpasses bei niedrigen Frequenzen auf der abfallenden Filterflanke auftreten. Durch die Verzerrung des ZF-Signals kann es, insbesondere bei Echosignalen aus dem Nahbereich des Füllstandsensors, zu Fehlern in der Echoamplitude und zu Entfernungsfehlern kommen.

Ist die SFC-Filterfunktion (also die Verzerrung in Abhängigkeit von der Frequenz) jedoch bekannt, so lässt sich die damit verbundene Verzerrung des ZF-Signals nach der Analog-Digital-Umsetzung wieder rückgängig machen oder entzerren und die Amplituden- und Entfernungsungenauigkeiten können eliminiert werden.

Die Filterfunktion im ZF-Kanal eines FMCW-Füllstandsensors kann beispielsweise vennessen werden. Insbesondere kann der ZF-Kanal mithilfc eines Referenzsignals, beispielsweise während des Messbetriebs des Füllstandsensors, charakterisiert werden. Daraus können dann Korrekturwerte zur Fehlerkorrektur des ZF-Signals berechnet werden.

Im Folgenden wird ein Verfahren zur Ermittlung eines geeigneten Entzerrers aus der Übertragungsfunktion eines SFC-Filters oder allgemein eines ZF-Kanals in einem FMCW-Füllstandsensor beschrieben. Weiterhin werden verschiedene Verfahren zur Entzerrung eines ZF-Signals beschrieben, welches durch ein SFC-Filter oder allgemein durch einen beliebigen nicht idealen Übertragungskanal verzerrt wurde.

Fig. 2 zeigt einen Schaltkreis 200 eines Füllstandsensors gemäß einem Ausführungsbeispiel der Erfindung. Die Schaltung 200 weist ein FMCW-Modul 101 auf, welches ein von der Signalerzeugungseinheit 110 generiertes Sendesignal (Messsignal) in ein FMCW-Messsignal umwandelt und an die Sende-/Empfangseinheit 111 weiterleitet, die das Messsignal in Richtung Füllgutoberfläche abstrahlt und daraufhin das reflektierte Messsignal empfängt und an das FMCW-Modul 101 übergibt.

Das FMCW-Modul gibt dann ein entsprechendes Zwischenfrequenzsignal x(t) an den Zwischenfrequenz-Kanal 117 aus. Das Zwischenfrequenzsignal x(t) ist bei einem FMCW-Füllstandsensor zunächst immer im Zeitbereich mit einer Rechteckfunktion bewertet. Dies ist systembedingt bei allen FMCW-Systemen der Fall, da ein ZF-Signal nur solange existiert, wie ein Sendesignal anliegt, welches auch als Lokaloszillator für den Mischer im FMCW-Modul dient und das Sendesignal eine endliche Dauer aufweist.

Die Dauer des Sendesignals (Messsignals) stellt gleichzeitig auch annähernd die Dauer des (rechteckgefensterten) Zwischenfrequenzsignals x(t) dar.

Das Zwischenfrequenzsignal x(t) läuft durch den SFC-Hochpass 102, 103 und wird dadurch vor allem im Bereich der niederen Frequenzen mehr oder weniger stark verzerrt. Im Zeitbereich bedeutet dies eine Faltung des ZF-Signals x(t) mit der Impulsantwort h(t) des SFC-Hochpasses 102. Das Modul 103 bezeichnet die Faltungsoperation des Zwischenfrequenzsignals x(t) und der Impulsantwort h(t) des SFC-Hochpasses.

Das SFC-gefilterte Signal wird anschließend mit einem Analog-Digital-Umsetzer 104 mit einem geeigneten Abtasttakt t = nT mit der Abtastperiode T digitalisiert. Als nächster Signalverarbeitungsschritt folgt die Entzerrung des ZF-Signals mit einer geeigneten Entzerrerfunktion g(nT) 105 in Form einer Faltungsoperation 106, welche als erneute Filterung nach der Analog-Digital-Umsetzung interpretiert werden kann.

Es folgt eine Fensterung des resultierenden Signals mit einer geeigneten Fensterfunktion w(nT) 107 durch einen Multiplikationsoperator 108. Diese nochmalige Fensterung ist in vielen Fällen notwendig, da die mangelnde Unterdrückung der Nebenmaxima des Rechteckfensters im Frequenzbereich nach Berechnung der diskreten Fourier-Transformation oftmals nicht ausreicht, um weitere Echos im Spektrum zu detektieren. Insbesondere kleinere Echos können durch die Nebenmaxima von größeren Echos bedingt durch das Rechteckfenster maskiert werden.

Anschließend erfolgt die Transformation in den Frequenzbereich, z. B. mittels einer diskreten Fourier-Transformation (DFT) 109. Das entstehende diskrete Spektrum stellt die Stützstellen der Echokurven des FMCW-Radars dar und steht für die weitere Signalverarbeitung, wie z. B. Echosuche und Echovermessung, also der Distanzbestimmung, zur Verfügung.

Auch kann ein sog. Anti-Aliasing-Filter vorgesehen sein, welches eine Tiefpasscharakteristik aufweist und beispielsweise vor der Analog-Digital-Umsetzung angewendet wird, um unerwünschte höhere Frequenzanteile im Zeitsignal zu unterdrücken. Dieses Filter ist hier der Einfachheit halber nicht dargestellt. Es kann jedoch beispielsweise im SFC-Filter 102, 103 integriert werden, so dass hier eine Bandpasscharakteristik resultiert. Alle Signalverarbeitungsschritte nach der Analog-Digital-Umsetzung werden beispielsweise in einem digitalen Signalprozessor 116 oder einem Mikrocontroller ausgeführt. Dieser Mikrocontroller kann auch die Quelle 110 des Sendesignals bereitstellen.

Die Entzerrung wird im Ausführungsbeispiel der Fig. 2 durch eine Faltung 106 des digitalisierten ZF-Signals mit der Zeitfunktion g(nT) 105 durchgeführt. Die Funktion g(nT) stellt die Impulsantwort des Entzerrerfilters dar, welches im Frequenzbereich durch die Übertragungsfunktion $G(\omega_k)$ beschrieben wird. Für eine perfekte Entzerrung des SFC-Filters muss für den Entzerrer gelten:

$$G(\omega_k) = \frac{1}{H(\omega)}\bigg|_{\omega=\omega_k}$$

$G(\omega_k)$ stellt die inverse Übertragungsfunktion des SFC-Filters $H(\omega)$ zu den diskreten Frequenzen

$$\omega_k = e^{\frac{j2\pi k}{N}}$$

dar.

Für das Signal am Ausgang des Entzerrers 105, 106 gelingt damit eine Rekonstruktion des ursprünglichen Zeitsignals x(t) zu den Abtastzeitpunkten nT.

Ist die Übertragungsfunktion des SFC-Filters $H(\omega)$ bekannt, sei es durch einmalige Vermessung beim Abgleich des Füllstandsensors oder durch Vermessung im Betrieb des Füllstandsensors oder durch Simulation mit einem geeigneten Simulationsprogramm bereits in der Entwicklungsphase des Füllstandsensors, so erhält man die Übertragungsfunktion $G(\omega_k)$ durch Invertierung von $H(\omega)$ zu den diskreten Frequenzen $\omega_k$. Die Funktion g(nT), mit deren Hilfe die Entzerrung in Fig. 2 mathematisch mit einer Faltungsoperation durchgeführt wird, erhält man durch Transformation der Übertragungsfunktion $G(\omega_k)$ in den Zeitbereich, z. B. mithilfe der inversen diskreten Fourier-Transformation (IDFT).

Nullstellen in der Übertragungsfunktion $H(\omega)$ können bei der Invertierung zu Problemen führen. In Fällen, in denen die invertierte Übertragungsfunktion $G(\omega_k)$ nicht existiert oder nicht zu einem stabilen oder realisierbaren System führt, kann sie auch approximiert werden. Dies ist beispielsweise durch die Anwendung eines digitalen FIR-Filters oder eines digitalen IIR-Filters möglich. Die Signalverarbeitungskette hierfür ist in Fig. 3 dargestellt. Bei der Entzerrung mit einem digitalen Filter 301 kann zudem die mathematisch aufwändige Faltungsoperation entfallen. Das digitale Filter 301 ist hierbei direkt hinter dem Analog-Digital-Wandler 104 und vor dem Multiplikationsoperator 108 der Fensterfunktion 107 sowie vor dem DFT-Modul 109 angeordnet.

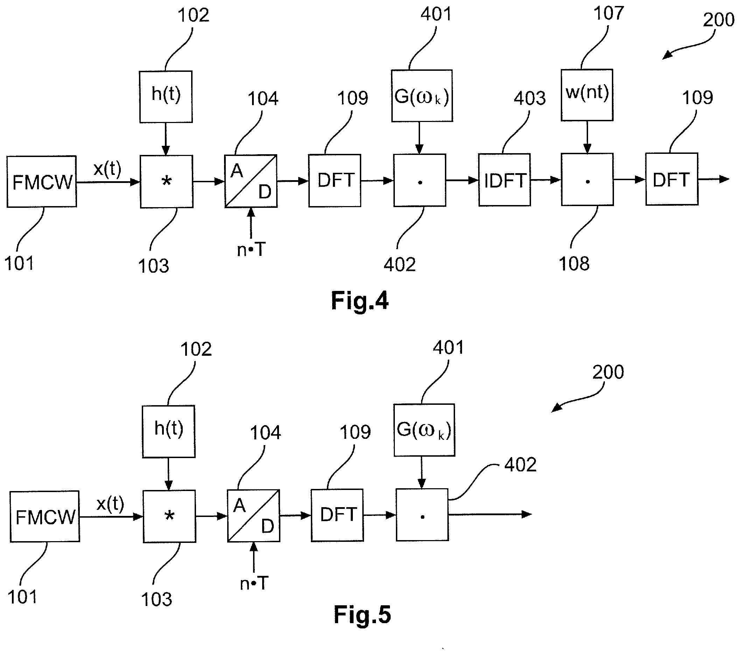

Die Entzerrung wird beispielsweise durch eine Faltungsoperation im Zeitbereich, wie in Fig. 2 dargestellt, realisiert. Eine Realisierung der Entzerrung durch eine Multiplikation im Frequenzbereich ist jedoch ebenso möglich. Eine beispielhafte Signalverarbeitungskette hierzu ist in Fig. 4 dargestellt.

Das ZF-Signal x(t) wird hierzu nach Durchlaufen des SFC-Hochpasses 102, 103 und nach der Analog-Digital-Umsetzung 104 zunächst mithilfe der diskreten Fourier-Transformation (DFT) 109 in den Frequenzbereich transformiert und anschließend mit der Übertragungsfunktion des Entzerrers G($\omega_k$) 401 multipliziert (siehe Multiplikationsmodul 402). Anschließend erfolgt die Rücktransformation in den Zeitbereich mithilfe der inversen diskreten Fourier-Transformation (IDFT), welche durch das IDFT-Modul 403 dargestellt ist. Danach erfolgt die Bewertung der sich ergebenden Zeitfunktion mit einem Fenster w(nT) 107 durch das Multiplikationsmodul 108.

Anschließend erfolgt eine erneute Transformation in den Frequenzbereich mittels des DFT-Moduls 109. Im Frequenzbereich erfolgt dann die weitere Signalverarbeitung, wie z. B. die Echosuche und Echovermessung, also die Distanzbestimmung.

Bei dieser Realisierung der Entzerrung im Frequenzbereich umgeht man ebenfalls die Faltungsoperation und ersetzt diese durch eine Multiplikation im Frequenzbereich. Durch die zusätzlichen Transformationen (DFT und IDFT) steigt jedoch der mathematische Berechnungsaufwand für die Entzerrung unter Umständen an.

Entfällt jedoch die erneute Fensterung des ZF-Signals mit der Fensterfunktion w(nT) nach der Entzerrung oder soll nur ein Rechteckfenster angewendet werden, so lässt sich die Entzerrung im Frequenzbereich vereinfachen. In diesem speziellen Fall reduziert sich der Aufwand auf eine Multiplikation des entstehenden Spektrums nach der DFT mit der Übertragungsfunktion G($\omega_k$) 401 des Entzerrers mithilfe des Multiplikationsmoduls 402, wie dies in Fig. 5 dargestellt ist.

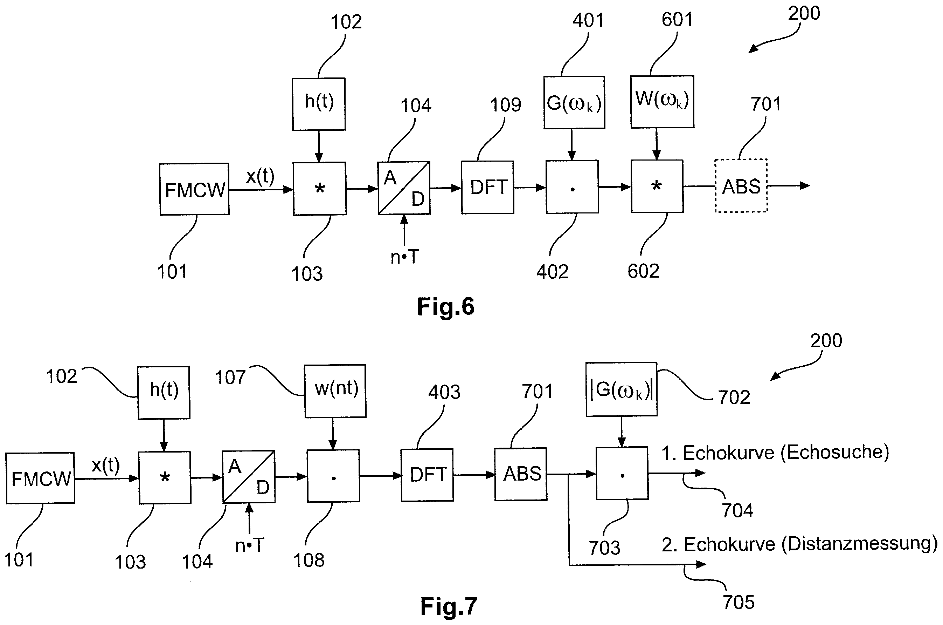

Die Bewertung des entzerrten ZF-Signals mit der Fensterfunktion w(nT) lässt sich nicht nur im Zeitbereich realisieren, wie dies in Fig. 4 dargestellt ist, sondern auch im Frequenzbereich. Dadurch entfallen ebenfalls die beiden zusätzlichen Transformationen DFT und IDFT am Ende der Signalkette in Fig. 4. Die Fensterfunktion wird im Frequenzbereich durch eine Faltung des entzerrten Spektrums (also des Ausgangssignals des Multiplikationsmoduls 402) mit der Funktion W($\omega_k$) 601 durchgeführt. Dies ist in Fig. 6 dargestellt. W($\omega_k$) stellt die Fouriertransformierte der Fensterfunktion w(nT) dar.

Der Einfluss des SFC-Filters auf die Amplituden im Spektrum, speziell im Nahbereich des Sensors, kann in vielen Fällen deutlich sein und insbesondere Einfluss auf das Auffinden des korrekten Füllstandechos in einer Umgebung mit Vielfachechos oder Störechos haben. Die Amplituden im Frequenzbereich sollten deshalb vor der Identifikation des Füllgutechos (sog. Echosuche) korrigiert werden. Ist das korrekte Echo gefunden, kann die Echovermessung (die Distanzmessung) ohne Korrektur der durch das SFC-Filter verursachten Verzerrung mit ausreichender Genauigkeit erfolgen. Der hierbei prinzipiell auftretende Fehler ist kleiner als bei einer Vermessung der ersten Echokurve 704 aus Fig. 7. Berücksichtigt man diese Erkenntnis, so lässt sich die Faltung im Zeitbereich mit der Funktion g(nT) zur Entzerrung (vgl. Fig. 2) vermeiden und wiederum auf eine einfache Multiplikation im Frequenzbereich reduzieren, wie dies auch in der Fig. 7 gezeigt ist.

Fig. 7 zeigt die zugehörige Signalverarbeitungskette. Nach der Fensterung 107, 108 des abgetasteten ZF-Signals folgt die Transformation in den Frequenzbereich durch das DFT-Modul 403 mittels der diskreten Fourier-Transformation. Nach der Bildung des Betragsspektrums durch das ABS-Modul 701 teilt sich die weitere Signalverarbeitung in zwei Kanäle 704, 705 auf.

Im ersten Kanal wird das Betragsspektrum des gefensterten ZF-Signals mit dem Betrag der Übertragungsfunktion des Entzerrers |G($\omega_k$)| 702 multipliziert und somit die Echoamplituden korrigiert. In diesem Kanal 704 erfolgt dann die Echosuche mit einem geeigneten Algorithmus.

Allerdings kann durch diese Art der Amplitudenkorrektur ein zusätzlicher Entfernungsfehler eingefügt werden. Dies ist vor allem dann der Fall, wenn eine Fensterfunktion w(nT) mit verbreitertem Hauptmaximum im Spektrum (im Vergleich zum Rechteckfenster) angewendet wird.

Ist das korrekte Füllstandecho gefunden, erfolgt dann die Distanzmessung im zweiten Kanal 705, und zwar ohne Korrektur der durch das SFC-Filter 102, 103 verursachten Verzerrung, und somit auch ohne den zusätzlichen Entfernungsfehler aus dem ersten Kanal.

Im übrigen sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

**Patentansprüche**

1. FMCW-Füllstandsensor, aufweisend:

ein FMCW-Modul (101) zum Umwandeln eines Messsignals des Füllstandsensors (100) in ein Zwischenfrequenzsignal;
einen Zwischenfrequenz-Kanal (117) zum Erzeugen einer Echokurve aus dem Zwischenfrequenzsignal, wobei der Zwischenfrequenz-Kanal aufweist:

einen Analog-Digital-Umsetzer (104) zur Digitalisierung des Zwischenfrequenzsignals;
einen Entzerrer (105, 106, 301, 401, 402, 702, 703) zur Entzerrung des von dem Analog-Digital-Umsetzer digitalisierten Zwischenfrequenzsignals;
wobei der Entzerrer (a) zur Faltung des digitalisierten Zwischenfrequenzsignals mit einer Entzerrungsfunktion in Form einer Zeitfunktion g(nT), oder (b) zur Multiplikation des digitalisierten Zwischenfrequenzsignals mit einer Entzerrungsfunktion in Form einer Übertragungsfunktion $G(\omega_k)$ zu diskreten Frequenzen, oder (c) als Filter (301) mit endlicher oder unendlicher Impulsantwort (FIR/IIR-Filter) zur Filterung des digitalisierten Zwischenfrequenzsignals, oder (d) zur Multiplikation des digitalisierten Zwischenfrequenzsignals mit einer Entzerrungsfunktion in Form des Betrags der Übertragungsfunktion $G(\omega_k)$ zu diskreten Frequenzen ausgeführt ist; und

wobei der Zwischenfrequenz-Kanal (117) ferner ein Fenstermodul (107, 108) aufweist, welches nach dem Entzerrer (105, 106, 301, 401, 402, 702, 703) angeordnet ist und zur Fensterung des durch Faltung, Multiplikation oder Filterung mit dem FIR/IIR-Filter (301) erhaltenen Zwischenfrequenzsignals ausgeführt ist.

2. Füllstandsensor nach Anspruch 1, weiter aufweisend:

ein Sensitivity Frequency Control-Filter (SFC-Filter) (102);
wobei das SFC-Filter in dem Zwischenfrequenzkanal (117) und vor dem Entzerrer (105, 106, 301, 401, 402, 702, 703) angeordnet ist;
wobei der Entzerrer zur Faltung des digitalisierten Zwischenfrequenzsignals mit einer Entzerrungsfunktion in Form einer Zeitfunktion g(nT) ausgeführt ist;
wobei die Zeitfunktion g(nT) eine Transformation der Übertragungsfunktion $G(\omega_k)$ in den Zeitbereich ist, wobei $G(\omega_k)$ die inverse Übertragungsfunktion des SFC-Filters $H(\omega)$ ist.

3. Füllstandsensor nach Anspruch 1,

ein Sensitivity Frequency Control-Filter (SFC-Filter) (102);
wobei das SFC-Filter in dem Zwischenfrequenzkanal (117) und vor dem Entzerrer (105, 106, 301, 401, 402, 702, 703) angeordnet ist;
wobei der Entzerrer zur Multiplikation des digitalisierten Zwischenfrequenzsignals mit einer Entzerrungsfunktion in Form des Betrags der Übertragungsfunktion $G(\omega_k)$ zu diskreten Frequenzen ausgeführt ist;
wobei die Übertragungsfunktion $G(\omega_k)$ die inverse Übertragungsfunktion des SFC-Filters $H(\omega)$ zu diskreten Frequenzen $\omega_k$ ist.

4. Füllstandsensor nach einem der vorhergehenden Ansprüche, der Zwischenfrequenz-Kanal (117) weiter aufweisend:
ein DFT-Modul (109), welches vor oder nach dem Entzerrer (105, 106, 301, 401, 402, 702, 703) angeordnet ist und zur diskreten Fouriertransformation des Zwischenfrequenzsignals ausgeführt ist.

5. Füllstandsensor nach einem der vorhergehenden Ansprüche, der Zwischenfrequenz-Kanal (117) weiter aufweisend:
ein IDFT-Modul (403), welches nach dem Entzerrer (105, 106, 301, 401, 402, 702, 703) angeordnet ist und zur inversen diskreten Fouriertransformation des Zwischenfrequenzsignals ausgeführt ist.

6. Füllstandsensor nach einem der vorhergehenden Ansprüche, der Zwischenfrequenz-Kanal (117) weiter aufweisend:
ein Betragsspektrumbildungsmodul (701), welches vor dem Entzerrer (702, 703) angeordnet ist.

7. Verfahren zum Entzerren eines Zwischenfrequenzsignals eines FMCW-Füllstandsensors, aufweisend die Schritte:

Umwandeln eines Messsignals des Füllstandsensors (100) in ein Zwischenfrequenzsignal;
Digitalisieren des Zwischenfrequenzsignals;
Entzerren des digitalisierten Zwischenfrequenzsignals;
Erzeugen einer Echokurve aus dem Zwischenfrequenzsignal;
wobei das Entzerren (a) durch Falten des digitalisierten Zwischenfrequenzsignals mit einer Entzerrungsfunktion in Form einer Zeitfunktion g(nT), oder (b) durch Multiplizieren des digitalisierten Zwischenfrequenzsignals mit einer Entzerrungsfunktion in Form einer Übertragungsfunktion $G(\omega_k)$ zu diskreten Frequenzen, oder (c) durch Filtern des digitalisierten Zwischenfrequenzsignals mit einem Filter mit endlicher oder unendlicher Impulsantwort (FIR/IIR-Filter), oder (d) durch Multiplizieren des digitalisierten Zwischenfrequenzsignals mit einer Entzerrungsfunktion in Form des Betrags der Übertragungsfunktion $G(\omega_k)$ zu diskreten Frequenzen erfolgt; und

Fenstern des durch Faltung, Multiplikation oder Filterung mit dem FIR/IIR-Filter (301) erhaltenen Zwischenfrequenzsignals.

8. Verfahren nach Anspruch 7, weiter aufweisend den Schritt:
diskrete Fouriertransformation des Zwischenfrequenzsignals vor oder nach dem Entzerren.

9. Verfahren nach einem der Ansprüche 7 bis 8, weiter aufweisend den Schritt:
inverse diskrete Fouriertransformation des Zwischenfrequenzsignals nach dem Entzerren.

10. Verfahren nach einem der Ansprüche 7 bis 9, weiter aufweisend den Schritt:
Ausbilden eines Betragsspektrums des Zwischenfrequenzsignals im Frequenzbereich und vor dem Entzerren.

**Claims**

1. FMCW fill level sensor, comprising:

an FMCW module (101) for converting a measurement signal of the fill level sensor (100) into an intermediate frequency signal;
an intermediate frequency channel (117) for generating an echo curve from the intermediate frequency signal, the intermediate frequency channel comprising:

an analog-to-digital converter (104) for digitizing the intermediate frequency signal;
an equalizer (105, 106, 301, 401, 402, 702, 703) for equalizing the intermediate frequency signal digitized by the analog-to-digital converter;
wherein the equalizer is configured (a) to convolve the digitized intermediate frequency signal with an equalization function in the form of a time function g(nT), or (b) to multiply the digitized intermediate frequency signal with an equalization function in the form of a transfer function $G(_k)$ at discrete frequencies, or (c) is implemented as a filter (301) with finite or infinite impulse response (FIR/IIR filter) for filtering the digitized intermediate frequency signal, or (d) for multiplying the digitized intermediate frequency signal by an equalization function in the form of the magnitude of the transfer function $G(_k)$ at discrete frequencies; and

wherein the intermediate frequency channel (117) further comprises a window module (107, 108) arranged downstream the equalizer (105, 106, 301, 401, 402, 702, 703) and adapted to window the intermediate frequency signal obtained by convolution, multiplication or filtering with the FIR/IIR filter (301).

2. Fill level sensor according to claim 1, further comprising:

a Sensitivity Frequency Control-Filter (SFC Filter) (102);
wherein the SFC filter is arranged in the intermediate frequency channel (117) and before the equalizer (105, 106, 301, 401, 402, 702, 703);
wherein the equalizer is configured to convolve the digitized intermediate frequency signal with an equalization function in the form of a time function g(nT);
wherein the time function g(nT) is a transformation of the transfer function $G(_k)$ into the time domain, where $G(_k)$ is the inverse transfer function of the SFC filter $H(\omega)$.

3. Fill level sensor according to claim 1,

a Sensitivity Frequency Control-Filter (SFC-Filter) (102);
wherein the SFC filter is arranged in the intermediate frequency channel (117) and before the equalizer (105, 106, 301, 401, 402, 702, 703);
wherein the equalizer is adapted to multiply the digitized intermediate frequency signal by an equalization function in the form of the magnitude of the transfer function $G(_k)$ at discrete frequencies;
wherein the transfer function $G(_k)$ is the inverse transfer function of the SFC filter $H(\omega_k)$ at discrete frequencies $\omega_k$

4. Fill level sensor according to any of the preceding claims, the intermediate frequency channel (117) further comprising:
a DFT module (109) which is arranged before or after the equalizer (105, 106, 301, 401, 402, 702, 703) and is configured for discrete Fourier transformation of the intermediate frequency signal.

5. Fill level sensor according to any of the preceding claims, the intermediate frequency channel (117) further comprising:
an IDFT module (403) which is arranged after the equalizer (105, 106, 301, 401, 402, 702, 703) and is configured for inverse discrete Fourier transformation of the intermediate frequency signal.

6. Fill level sensor according to any of the preceding claims, further comprising the intermediate frequency channel (117):

a magnitude spectrum formation module (701) arranged before the equalizer (702, 703).

7. Method for equalizing an intermediate frequency signal of an FMCW fill level sensor, comprising the steps of:

converting a measurement signal of the fill level sensor (100) into an intermediate frequency signal;
digitizing the intermediate frequency signal;
equalizing the digitized intermediate frequency signal;
generating of an echo curve from the intermediate frequency signal;
wherein the equalizing is obtained (a) by convoluting the digitized intermediate frequency signal with an equalization function in the form of a time function g(nT), or (b) by multiplying the digitized intermediate frequency signal with an equalization function in the form of a transfer function $G_{(k)}$ at discrete frequencies, or (c) by filtering the digitized intermediate frequency signal with a finite or infinite impulse response filter (FIR/IIR filter), or (d) by multiplying the digitized intermediate frequency signal by an equalization function in the form of the magnitude of the transfer function $G_{(k)}$ at discrete frequencies; and
windowing of the intermediate frequency signal obtained by convolution, multiplication or filtering with the FIR/IIR filter (301).

8. Method according to claim 7, further comprising the step:
discrete Fourier transform of the intermediate frequency signal before or after equalization.

9. Method according to any of claims 7 to 8, further comprising the step:
inverse discrete Fourier transform of the intermediate frequency signal after equalization.

10. Method according to any of claims 7 to 9, further comprising the step:
formation of a magnitude spectrum of the intermediate frequency signal in the frequency domain and before equalization.

**Revendications**

1. Capteur de niveau de remplissage FMCW, comprenant :

un module FMCW (101) pour convertir un signal de mesure du capteur de remplissage (100) en un signal de fréquence intermédiaire ;
un canal de fréquence intermédiaire (117) pour générer une courbe d'écho à partir du signal de fréquence intermédiaire, le canal de fréquence intermédiaire comprenant

un convertisseur analogique-numérique (104) pour numériser le signal de fréquence intermédiaire ;
un égaliseur (105, 106, 301, 401, 402, 702, 703) pour égaliser le signal de fréquence intermédiaire numérisé par le convertisseur analogique-numérique ;
l'égaliseur étant utilisé (a) pour convoluer le signal de fréquence intermédiaire numérisé avec une fonction d'égalisation sous la forme d'une fonction de temps g(nT), ou (b) pour multiplier le signal de fréquence intermédiaire numérisé avec une fonction d'égalisation sous la forme d'une fonction de transfert $G_{(k)}$ vers des fréquences discrètes, ou (c) comme un filtre (301) à réponse impulsionnelle finie ou infinie (filtre FIR/IIR) pour filtrer le signal de fréquence intermédiaire numérisé, ou (d) pour multiplier le signal de fréquence intermédiaire numérisé par une fonction d'égalisation sous la forme de l'amplitude de la fonction de transfert $G_{(k)}$ vers des fréquences discrètes; et

le canal de fréquence intermédiaire (117) comprenant en outre un module de fenêtre (107, 108) disposé après l'égaliseur (105, 106, 301, 401, 402, 702, 703) et adapté pour fenêtrer le signal de fréquence intermédiaire obtenu par convolution, multiplication ou filtrage avec le filtre FIR/IIR (301).

2. Capteur de niveau de remplissage selon la revendication 1, comprenant en outre

un filtre Sensitivity Frequency Control (filtre SFC) (102) ;
le filtre SFC étant disposé dans le canal de fréquence intermédiaire (117) et avant l'égaliseur (105, 106, 301, 401, 402, 702, 703) ;
l'égaliseur étant conçu pour convoluer le signal de fréquence intermédiaire numérisé avec une fonction d'égalisation sous la forme d'une fonction temporelle g(nT) ;
la fonction de temps g(nT) étant une transformation de la fonction de transfert $G_{(k)}$ dans le domaine temporel, $G_{(k)}$ étant la fonction de transfert inverse du filtre SFC H(ω)

3. Capteur de niveau de remplissage selon la revendication 1,

un filtre Sensitivity Frequency Control (filtre SFC) (102) ;

le filtre SFC étant disposé dans le canal de fréquence intermédiaire (117) et avant l'égaliseur (105, 106, 301, 401, 402, 702, 703) ;

l'égaliseur étant conçu pour multiplier le signal de fréquence intermédiaire numérisé par une fonction d'égalisation sous la forme de l'amplitude de la fonction de transfert $G_{(k)}$ vers des fréquences discrètes ;

la fonction de transfert $G_{(k)}$ étant la fonction de transfert inverse du filtre SFC $H(\omega_k)$ vers des fréquences discrètes $\omega_k$

4. Capteur de niveau de remplissage selon l'une des revendications précédentes, le canal de fréquence intermédiaire (117) comprenant en outre:

un module DFT (109) qui est disposé avant ou après l'égaliseur (105, 106, 301, 401, 402, 702, 703) et qui est conçu pour la transformation de Fourier discrète du signal de fréquence intermédiaire.

5. Capteur de niveau de remplissage selon l'une des revendications précédentes, le canal de fréquence intermédiaire (117) comprenant en outre:

un module IDFT (403) qui est disposé après l'égaliseur (105, 106, 301, 401, 402, 702, 703) et qui est conçu pour une transformation de Fourier discrète inverse du signal de fréquence intermédiaire.

6. Capteur de niveau de remplissage selon l'une des revendications précédentes, le canal de fréquence intermédiaire (117) comprenant en outre:

un module de formation de spectre d'amplitude (701) disposé avant l'égaliseur (702, 703).

7. Méthode pour égaliser un signal de fréquence intermédiaire d'un capteur de niveau de remplissage FMCW, comprenant les étapes suivantes :

conversion d'un signal de mesure du capteur de niveau remplissage (100) en un signal de fréquence intermédiaire ;

numériser le signal de fréquence intermédiaire ;

égalisation du signal de fréquence intermédiaire numérisé ;

génération d'une courbe d'écho à partir du signal de fréquence intermédiaire ;

l'égalisation étant effectuée (a) en convoluant le signal de fréquence intermédiaire numérisé avec une fonction d'égalisation sous la forme d'une fonction de temps g(nT), ou (b) en multipliant le signal de fréquence intermédiaire numérisé avec une fonction d'égalisation sous la forme d'une fonction de transfert $G_{(k)}$ en fréquences discrètes, ou (c) en filtrant le signal de fréquence intermédiaire numérisé avec un filtre à réponse impulsionnelle finie ou infinie (filtre FIR/IIR), ou (d) en multipliant le signal de fréquence intermédiaire numérisé par une fonction d'égalisation sous la forme de l'amplitude de la fonction de transfert $G_{(k)}$ vers des fréquences discrètes ; et

fenêtrage du signal de fréquence intermédiaire obtenu par convolution, multiplication ou filtrage avec le filtre FIR/IIR (301).

8. Méthode selon la revendication 7, comprenant en outre l'étape :

transformation de Fourier discrète du signal de fréquence intermédiaire avant ou après égalisation.

9. Méthode selon l'une quelconque des revendications 7 à 8, comprenant en outre l'étape :

transformation de Fourier discrète inverse du signal de fréquence intermédiaire après égalisation.

10. Méthode selon l'une quelconque des revendications 7 à 9, comprenant en outre l'étape

formation d'un spectre de magnitude du signal de fréquence intermédiaire dans le domaine des fréquences et avant égalisation.

100

111

114

115

112

113

**Fig. 1A**

Verstärkung

2

3

1

Frequenz

**Fig. 1B**

**Fig.2**

**Fig.3**

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2660568 A1
- DE 102008050117 A1
- EP 1933117 A2
- WO 9838524 A1
- US 2010223019 A